# EUROPEAN PATENT SPECIFICATION

(11) **EP 3 263 963 B1**
(45) Date of publication and mention of the grant of the patent: **29.05.2019**
(21) Application number: 17178585.0
(22) Date of filing: 29.06.2017
(51) Int. Cl.: G01H 3/14, F16K 37/00, F16K 7/14, F16K 31/06

(54) **FLUID CONTROL VALVE WITH SENSOR**
FLUIDREGELVENTIL MIT SENSOR
SOUPAPE DE RÉGULATION DE FLUIDE AVEC CAPTEUR

(30) Priority: 29.06.2016 JP 2016129207
(43) Date of publication of application: 03.01.2018
(73) Proprietor: CKD Corporation, Komaki-shi, Aichi 485-8551 (JP)
(72) Inventor: IGUCHI, Seiji, Komaki-shi, Aichi 485-8551 (JP); NAGAI, Kiyoshi, Komaki-shi, Aichi 485-8551 (JP)
(74) Representative: Prüfer & Partner mbB Patentanwälte · Rechtsanwälte

(56) References cited:
- WO-A1-2004/102052
- WO-A1-2007/072602
- WO-A1-2016/038527
- GB-A- 2 497 994
- JP-A- 2002 181 229
- JP-A- 2014 173 852
- JP-B2- 5 399 687
- US-A- 5 008 841
- US-A- 5 616 829

## Description

### BACKGROUND

### Technical Field

The present invention relates to a fluid control valve with a sensor including a valve main body having an actuator section and a valve section, the actuator part being configured to move a movable member, the valve section being formed with a valve seat with which a valve element of the movable member will come into or out of contact, and a vibration sensor for detecting vibration of the valve main body.

### Related Art

Conventionally, a fluid control valve for medical liquid in a medical analysis device is used to control various kinds of fluids such as a reagent, a dilute solution, and a cleaning solution. As the fluid control valve, there is proposed a fluid control valve disclosed in Patent Document 1 configured to check whether or not allowing/stopping a flow of the fluid is definitely performed in the fluid control valve. This fluid control valve in Patent Document 1 is equipped with a vibration sensor to detect a sound generated in the control valve during operation, and determine the presence/absence of an operation failure by comparing the sound with a normal sound to determine whether the fluid is flowing or is shut off. Patent Document 2 discloses a device for detecting fluid leakage in pressure pipes with a pressure sensor.
Patent Document 3 discloses a control system for an internal combustion engine in which an abnormal pressure generated on a primary side of a piped valve is compared with a judgment reference value calculated from a normal pressure, and it is determined whether it is due to abnormal pressure or leakage from the valve seat.
Patent Document 4 discloses an apparatus and a method for monitoring a steam plant by monitoring a vibro-acoustic behavior of at least a portion of the steam plant.

### Related Art Documents

### Patent Documents

Patent Document 1: Japanese Patent No. 5399687
Patent Document 2: WO 2016/038527 A1
Patent Document 3: JP 2002 181229 A
Patent Document 4: GB 2 497 994 A

### SUMMARY

### Technical Problems

However, the conventional fluid control valve only detects the operation failure of the control valve, and cannot detect a leak at a valve closing part. When this valve is used in a medical analysis device, for example, the fluid may be deposited on or adhered to the valve closing part, leading to clogging at the valve closing part, thereby developing a leak therefrom. Especially, in a blood testing device, if protein of a sample is accumulated on a sealing surface of a valve closing part, a leak occurs at the valve closing part, which may cause false detection.

Moreover, a drive source of the control valve, such as a solenoid, an air cylinder, or a motor, may slow down because of durability operation, thereby causing a valve opening/closing force to weaken. Further, sudden inflow of some foreign substances or the like into a fluid flowing through a passage or wear of a valve section for opening and closing a passage of the control valve may block the valve section from appropriately closing. This may develop a leak at the valve closing part.

In order to detect the leak at the valve closing part, some valves are attached with sensors, such as a flowmeter, a pressure gauge, and a thermometer, which are arranged before and behind the control valve. However, those sensors need space to be arranged, leading to an increased size of the device. Also, for such a device, it is difficult to detect a slight leak caused by foreign substances with a diameter as small as the thickness of a human (adult) hair (about 100 µm). Further, these sensors need to be placed inside of a passage; however, a device for treating several kinds of fluids has restricted materials for parts to be wetted (wetted parts). Therefore, it is preferable to minimize the number of the wetted parts.

The present invention has been made to solve the above problems and has the purpose to provide a fluid control valve to detect a slight leak at a valve closing part of the fluid control valve.

### Means of Solving the Problems

To achieve the above purpose, one aspect of the invention provides a fluid control valve with a sensor, including: a valve main body including: an actuator section provided with a movable member including a valve element and configured to move the movable member; and a valve section provided with a valve seat with which the valve element will come into or out of contact; and a vibration sensor which detects vibration generated in the valve main body,wherein the vibration is generated by impingement of fluid flowing from an inlet passage towards an outlet passage by a water hammer phenomenon that generates impact when the valve element comes into contact with the valve seat and no fluid leaks between the valve element and the valve seat, and the fluid control valve further includes an abnormality determining unit configured to determine the valve main body to be normal with no fluid leak between the valve element and the valve seat when the vibration sensor detects the vibration with an amplitude exceeding a predetermined threshold, and determine the valve main body to be abnormal with fluid leak between the valve element and the valve seat when the vibration sensor does not detect the vibration with an amplitude exceeding the predetermined threshold, and the abnormality determining unit determines the valve main body to be abnormal based on a detection result of the vibration even when a fluid leak is caused by threadlike foreign substances.

Further developments of the present invention are given in the dependent claims.

### Advantageous Effects

According to the above configuration, by utilizing the water hammer phenomenon the fluid control valve can detect a slight leak at the valve closing part by detecting the vibrations with an amplitude not exceeding the threshold.

### BRIEF DESCRIPTION OF THE DRAWINGS

FIG. 1 is a sectional view of a fluid control valve in a valve closed state;
FIG. 2 is a sectional view of the fluid control valve in a valve open state;
FIG. 3 is a sectional view of the fluid control valve in a valve closed state where foreign substances flow into a fluid;
FIG. 4 is a graph showing a relationship between vibration, voltage, and time under a condition where the fluid pressure is 0.0 MPa and the fluid control valve is normal (no foreign substances);
FIG. 5 is a graph showing a relationship between vibration, voltage, and time under a condition where the fluid pressure is 0.0 MPa and the fluid control valve is abnormal (some foreign substances);
FIG. 6 is a graph showing a relationship between vibration, voltage, and time under a condition where the fluid pressure is 0.3 MPa and the fluid control valve is normal (no foreign substances);
FIG. 7 is a graph showing a relationship between vibration, voltage, and time under a condition where the fluid pressure is 0.3 MPa and the fluid control valve is abnormal (some foreign substances);
FIG. 8 is a graph showing a relationship between vibration, voltage, and time under a condition where the voltage is 70%;
FIG. 9 is a graph showing a relationship between vibration, voltage, and time under a condition where the voltage is 80%;
FIG. 10 is a graph showing a relationship between vibration, voltage, and time under a condition where the voltage is 90%;
FIG. 11 is a graph showing a relationship between vibration, voltage, and time when there is no sliding resistance;
FIG. 12 is a graph showing a relationship between vibration, voltage, and time when the sliding resistance increases; and
FIG. 13 is a control block diagram of a vibration sensor.

### DESCRIPTION OF EMBODIMENTS

A detailed description of a preferred embodiment of a fluid control valve with a sensor according to the present invention will now be given referring to the accompanying drawings.

### (Structure of a fluid control valve with a sensor)

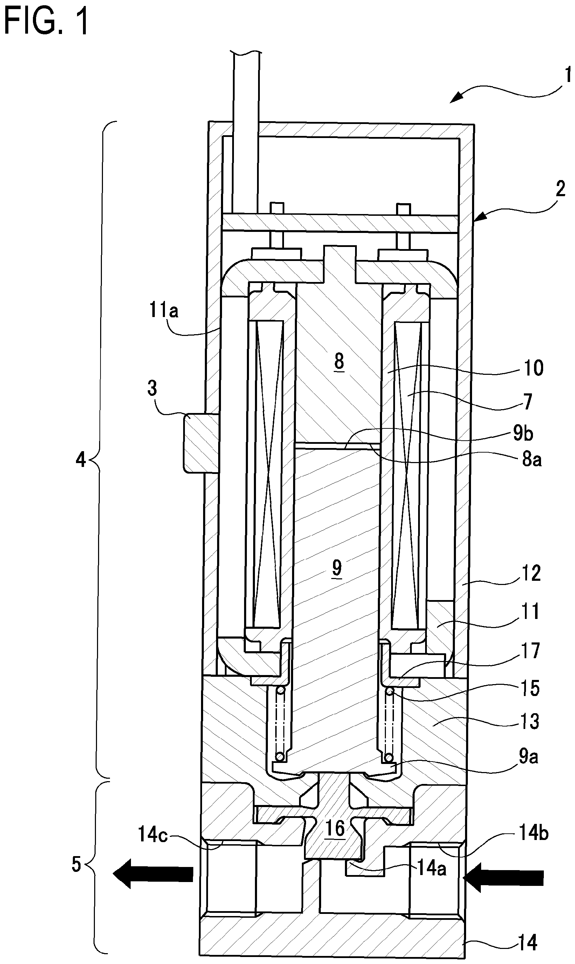

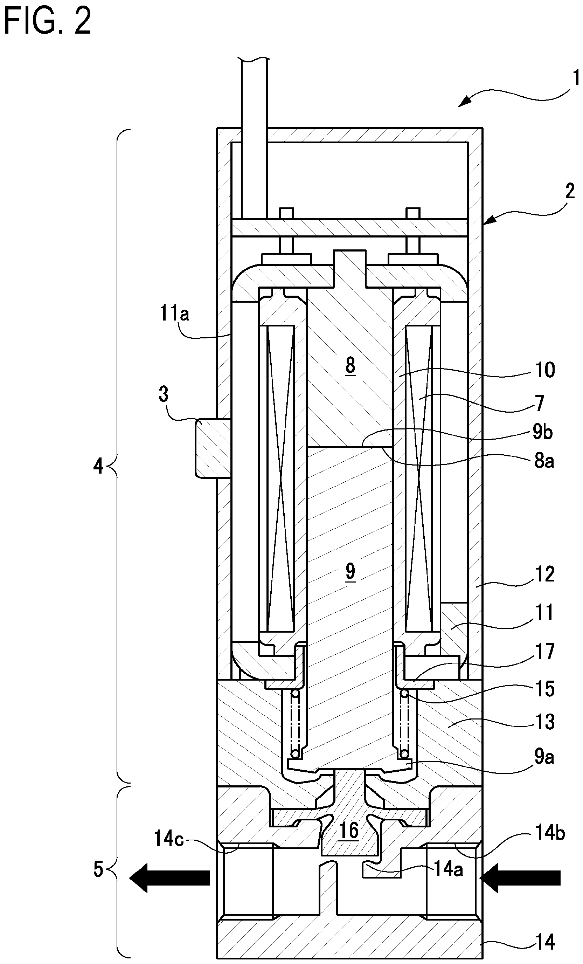

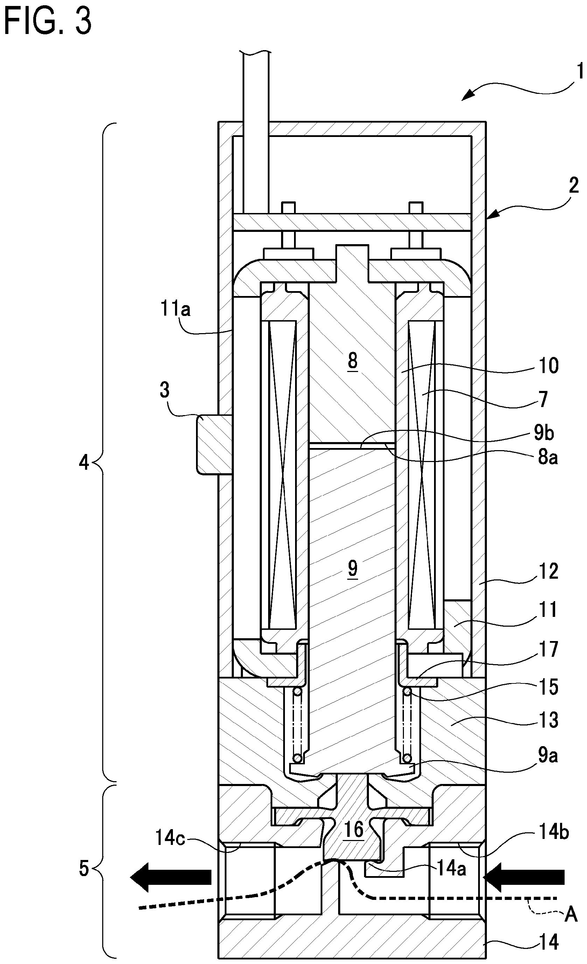

Explanation is given to a structure of a fluid control valve with a sensor (hereinafter, also referred to as a "sensor-equipped fluid control valve" or simply a "fluid control valve") 1, referring to FIGs. 1 to 3. FIG. 1 is a sectional view of the fluid control valve 1 in a valve open state. FIG. 2 is a sectional view of the fluid control valve 1 in a valve closed state. FIG. 3 is a sectional view of the fluid control valve 1 in a valve closed state where a foreign substance A flows into a fluid.

The fluid control valve 1 includes, as shown in FIG. 1, a valve main body 2 and a vibration sensor 3 for detecting vibration of the valve main body 2. The valve main body 2 includes an actuator section 4 and a valve section 5. The actuator section 4 is provided with a fixed iron core 8 and a movable iron core 9 (an example of a "movable member") coaxially arranged in a hollow coil bobbin 10. An excitation coil 7 is wound around the coil bobbin 10. One end surface 8a (a lower surface in FIG. 1) of the fixed iron core 8 is a pole face, and this pole face is coaxially opposed to one end surface 9b (an upper surface in FIG. 1) of the movable iron core 9. The fixed iron core 8 has an outside diameter approximately equal to the inside diameter of the coil bobbin 10. The excitation coil 7 is circumferentially surrounded by a yoke 11. The yoke 11 is covered with a mold part 12. Under a lower end of the mold part 12, a connecting member 13 is placed in connection with the valve section 5.

A lower end of the movable iron core 9 is formed with a flange 9a extending radially outwardly. The flange 9a retains one end of a spring 15 which urges a diaphragm valve element (hereinafter, simply referred to as a "valve element") 16 described later in a direction to contact with a valve seat 14a. The other end of the spring 15 abuts on a spring receiving member 17 placed between the yoke 11 and the connecting member 13.

The valve section 5 includes a passage block 14 formed with an inlet passage 14b and an outlet passage 14c. The valve seat 14a is formed at a center of the passage block 14, with which the valve element 16 will come into or out of contact.

In the state shown in FIG. 1, the excitation coil 7 is not energized. Accordingly, the movable iron core 9 is separated from the fixed iron core 8, and the valve element 16 is held in contact with the valve seat 14a by the urging force of the spring 15. Thus, the inlet passage 14b is out of communication with the outlet passage 14c.

On the other hand, when the excitation coil 7 is energized, the movable iron core 9 is attracted into contact with the fixed iron core 8. Thus, as shown in FIG. 2, the diaphragm element 16 is moved apart from the valve seat 14a, and the inlet passage 14b is communicated with the outlet passage 14c.

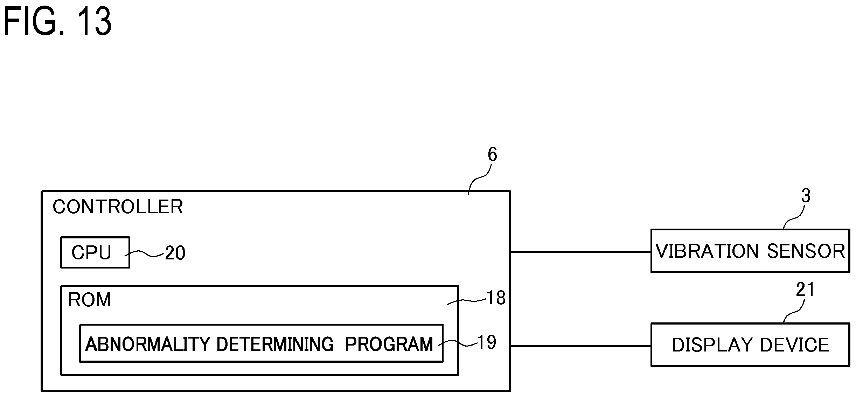

Next, the vibration sensor 3 will be explained below. FIG. 13 is a control block diagram of the vibration sensor 3. The vibration sensor 3 has a chip shape of a predetermined size (e.g., several mm square), and is soldered on a board (not shown). The board attached with the vibration sensor 3 is mounted in the valve main body 2, at a position where vibration generated in the valve main body 2 which will be described later can be detected. In this embodiment, the vibration sensor 3 is directly attached to a side surface 11a of the yoke 11 and partly covered with the mold part 12. On the board, a controller 6 (one example of an "abnormality determining unit") is attached. The controller 6 includes a CPU 20 and a ROM 18. The ROM 18 has an abnormality determining program 19 stored. The abnormality decision program 19 is performed by the controller 6 (one example of an "abnormality determining unit") to determine whether the valve main body 2 works normally or abnormally. The controller 6 is connected with a display device 21 which displays whether the valve main body 2 works normally or abnormally.

A detecting vibration direction which the vibration sensor 3 can detect is one. It is therefore most preferable to dispose the vibration sensor 3 in an orientation having the detecting vibration direction adjusted to an actual vibration direction. In this embodiment, the vibration generated by motion of the movable iron core 9 is also transmitted to the side surface 11a of the yoke 11. Thus, the vibration sensor 3 having the detecting vibration direction adjusted to the actual vibrating direction can detect the vibration. Even if the actual vibration direction is oblique with respect to the vibration sensor 3, this sensor 3 can also detect such vibration.

### (Effects of the sensor-equipped fluid control valve)

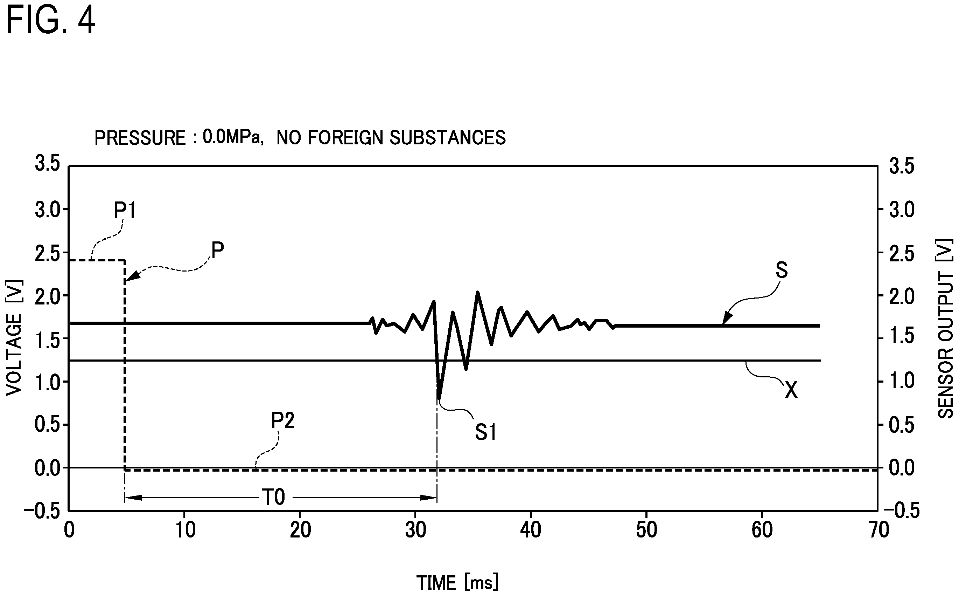

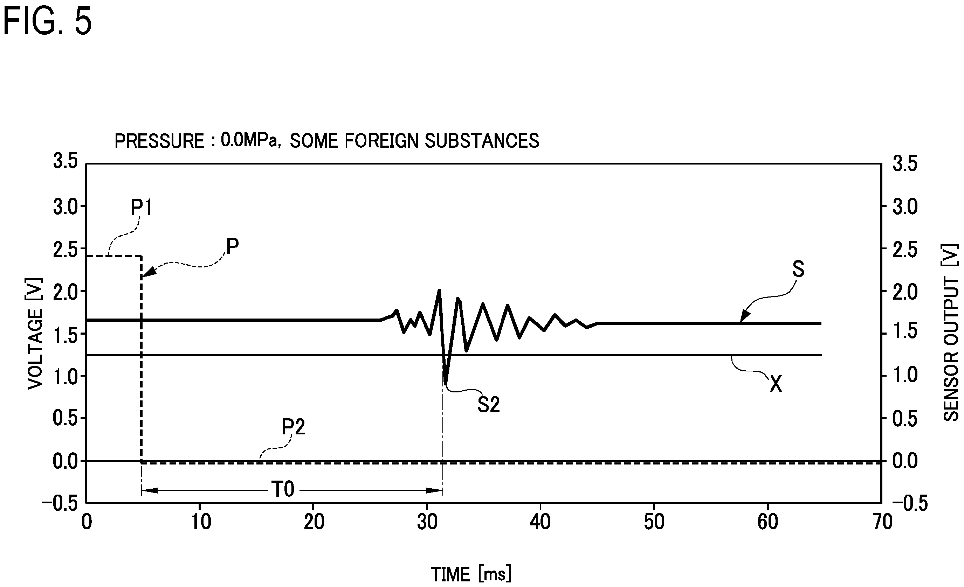

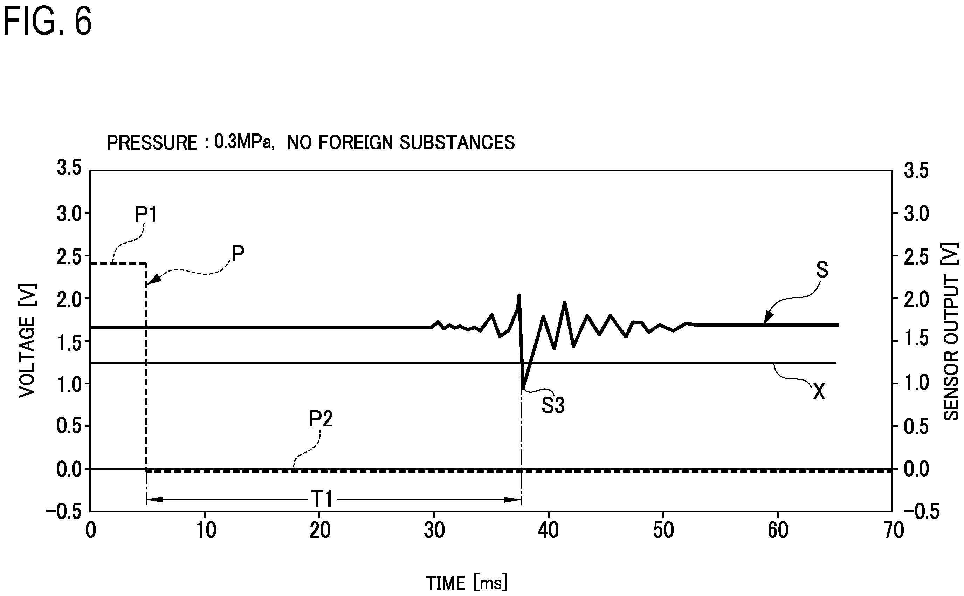

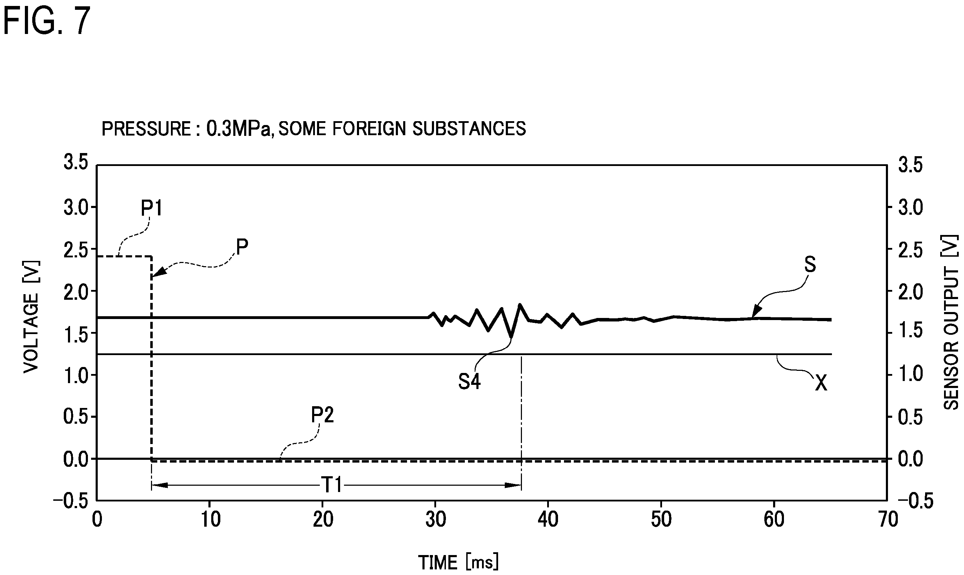

Next, the effects in the fluid control valve 1 in the closed state will be explained with FIG. 4 to FIG. 7. FIG. 4 is a graph showing a relationship between vibration S, voltage P, and time T ("S-P-T relationship") under a condition where the fluid control valve 1 is normal (no foreign substances are present in a fluid) and the pressure of the fluid flowing through the fluid control valve 1, i.e., the fluid pressure, is 0.0 MPa. FIG. 5 is a graph showing the S-P-T relationship under a condition where the fluid control valve 1 is abnormal (some foreign substances are present in a fluid) and the fluid pressure is 0.0 MPa. FIG. 6 is a graph showing the S-P-T relationship under a condition where the fluid control valve 1 is normal (no foreign substances are present in a fluid) and the fluid pressure is 0.3 MPa. FIG. 7 is a graph showing the S-P-T relationship under a condition where the fluid control valve 1 is abnormal (some foreign substances are present in a fluid) and the fluid pressure is 0.3 MPa. In the graphs of FIG. 4 to FIG. 7, a vertical axis represents solenoid valve voltage [V] indicating the pressure P, and vibration sensor output [V] indicating the vibration S. A horizontal axis represents the time T [ms]. The abnormal state of the fluid control valve 1 (some foreign substances are present in the fluid) in FIGs. 5 and 7 is the foreign substances A flow into a passage (the inlet passage 14b and the outlet passage 14c) of the valve section 5 as shown in FIG. 3.

When energization of the excitation coil 7 is stopped and hence the pressure P in the control valve 1 decreases from P1 to P2, the movable iron core 9 is moved downward by the force of the spring 15, bringing the valve element 16 into contact with valve seat 14a. At that time, the water hammer phenomenon occurs.

Herein, the water hammer phenomenon will be explained. When the valve element 16 in the valve main body 2 is abruptly moved to a closed position, the fluid flowing from the inlet passage 14b toward the outlet passage 14c strikes or impinges on the passage wall of the inlet passage 14b by an inertia force of the fluid. This impingement of the fluid generates the water hammer phenomenon, which makes an impulsive sound. This water hammer phenomenon produces the vibration S. This vibration S is detected by the vibration sensor 3.

Under the condition where the fluid pressure is 0.3 MPa, when no foreign substances are present between the valve element 16 and the valve seat 14 and thus no fluid leaks therebetween, the vibration S3 is generated by the water hammer phenomenon and, as shown in FIG. 6, the vibration S3 is produced with an amplitude exceeding a threshold X after a time T1 passes. The threshold X has been set in advance according to production or use conditions. Thus, the valve main body 2 is determined to be normal based on the abnormality determining program 19. This determination result, indicating that the valve main body 2 is normal, is displayed on the display device 21.

When some foreign substances are present between the valve element 16 and the valve seat 14a and a resultant leak occurs, as shown in FIG. 7, the vibration S4 is generated by the water hammer phenomenon, but this vibration S4 is produced with an amplitude not exceeding the threshold X even after the time T1 passes. Thus, the vibration sensor 3 detects the vibration S4 having an amplitude not exceeding the threshold X, so that the valve main body 2 is determined to be abnormal based on the abnormality determining program 19. This determination result, indicating that the valve main body 2 is abnormal, is displayed on the display device 21.

Herein, the reason why the amplitude of the vibration S4 does not exceed the threshold X when some foreign substances are present and a leak occurs lies in that, if any foreign substances are present between the valve element 16 and the valve seat 14a, a slight clearance or gap is created therebetween thereby forming a passage. This passage allows a fluid to flow in the outlet passage 14c just after valve closing and thus a small negative pressure is only generated, resulting in a small amplitude of the vibration S4 produced by the water hammer phenomenon. By utilizing the phenomenon, it is possible to detect even a slight leakage based on a detection result of the vibration even when a threadlike foreign substance has a thickness of about 100 µm.

On the other hand, under the condition where the fluid pressure is around 0.0 MPa, when no foreign substances are present between the valve element 16 and the valve seat 14 and thus no fluid leaks therebetween, as shown in FIG. 4, after a time T0 passes, the vibration S1 is generated by the valve element 16 when contacting the valve seat 14a with the urging force of the spring 15. The amplitude of this vibration S1 exceeds the predetermined threshold X.

However, under the condition where the fluid pressure is around 0.0 MPa, even if any foreign substances are present and a leak occurs, as is the case that any foreign substances are not present, the valve element 16 comes into contact with the valve seat 14a by the urging force of the spring 15 after T0 passes, so that the vibration S2 is generated with an amplitude exceeding the threshold X as shown in FIG. 5. Under the condition where the fluid pressure is around 0.0 MPa, it is impossible to detect the abnormal state of the valve main body 2 based on the vibration S. That is because, under the condition where the fluid pressure is around 0.0 MPa, the flow velocity of the fluid is low and hence the fluid hardly flows. For such a low flow velocity, the pressure of the fluid in the outlet passage 14c changes, by a small difference, from a negative pressure to a positive pressure after valve closing. Therefore, even if there are any foreign substances and any clearance, the fluid is not caused to flow through the clearance. When the valve element 16 is brought in contact with the valve seat 14a by the urging force of the spring 15, therefore, the vibrations S1 and S2 with amplitudes exceeding the threshold X are generated.

Under the condition where the fluid pressure is 0.0 MPa (no fluid flows), the water hammer phenomenon does not occur. When the fluid pressure is 0.0 MPa, the valve element 16 is brought in contact with the valve seat 14a by the urging force of the spring 15, thereby generating vibration. However, under the condition where the fluid pressure is 0.3 MPa (a fluid flows), the fluid exerts a force on the valve element 16 in a direction to push it up (i.e., a force against the urging force), thus preventing a large impact at the time of seating of the valve element 16 on the valve seat 14a. Therefore, the faster the flow is, the stronger the water hammer phenomenon is. However, when any foreign substance is caused between the valve seat 14a and the valve element 16 or a sealing surface of the valve seat 14a is defective, the fluid is caused to flow from a clearance formed around the foreign substance. Thus, a small water hammer occurs.

In this embodiment, the fluid control valve is configured to detect the leak caused by a threadlike foreign substance suddenly getting between the valve element 16 and the valve seat 14a. In addition, the fluid control valve can also detect any leak caused by precipitate of the fluid, deterioration of seal portions of the valve element and the valve seat, or deterioration of the movable iron core.

Also, at the time of generation of vibrations during operation (due to jamming or stick-slip of the movable iron core), the valve main body 2 is not closed and hence the magnitude of vibration descends. In this case, accordingly, abnormality of the valve main body 2 can also be detected. Furthermore, since the sensor 3 does not need to be installed in the passage (a wetted part), there is no influence on the fluid to be used. Also, since the vibration sensor 3 is installed in the valve main body 2, there is no need to install additional sensors such as a flow meter, a pressure gauge, a thermometer, etc. before and after the fluid control valve 1 in order to detect the leak, so that the fluid control valve 1 can be reduced in size.

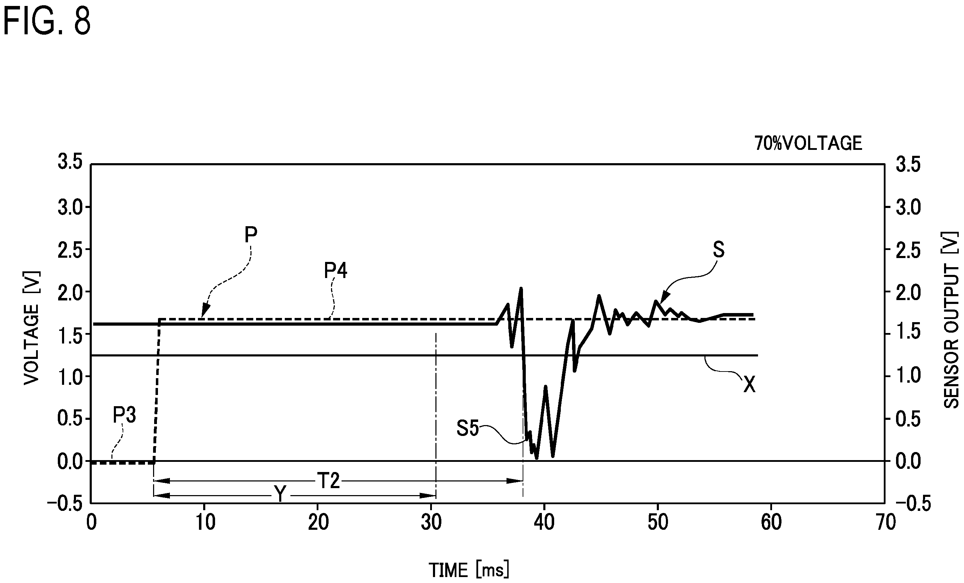

Next, the effects of the fluid control valve 1 in the valve open state will be explained with FIG. 8 to FIG. 12. FIG. 8 is a graph showing a relationship between vibration S, voltage P, and time T under the condition where the voltage is 70% (this 70% voltage means 70% of the rated voltage of the valve main body 2. The same applies to the following.)

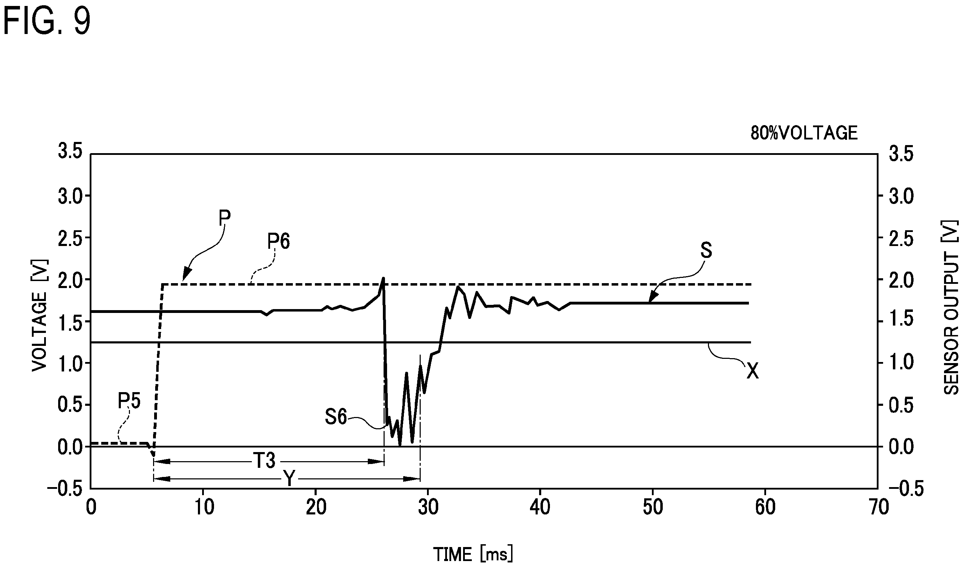

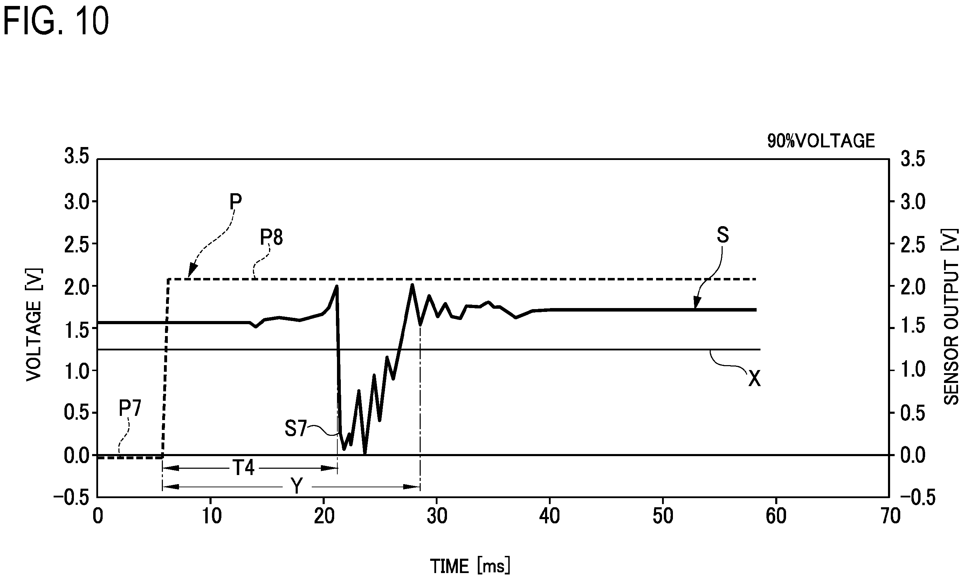

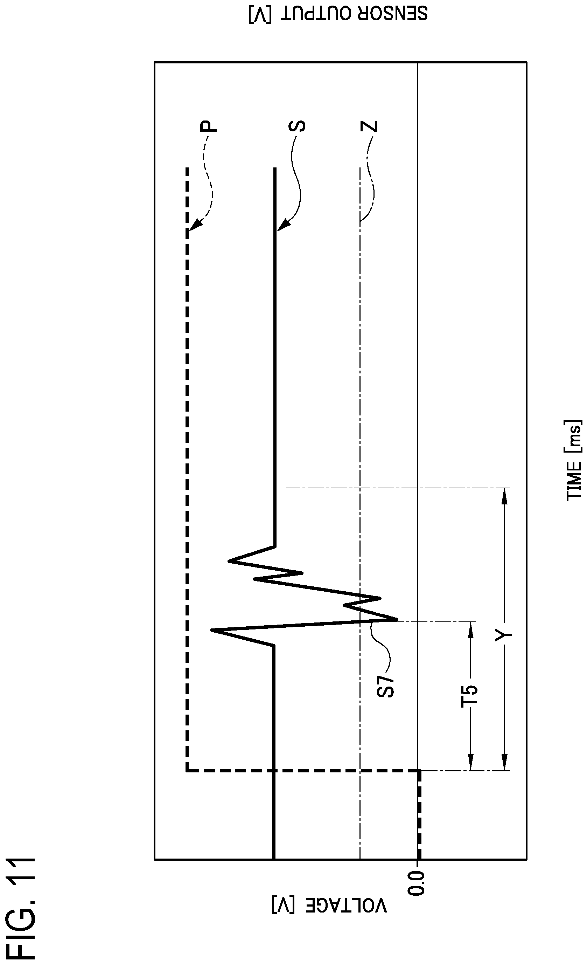

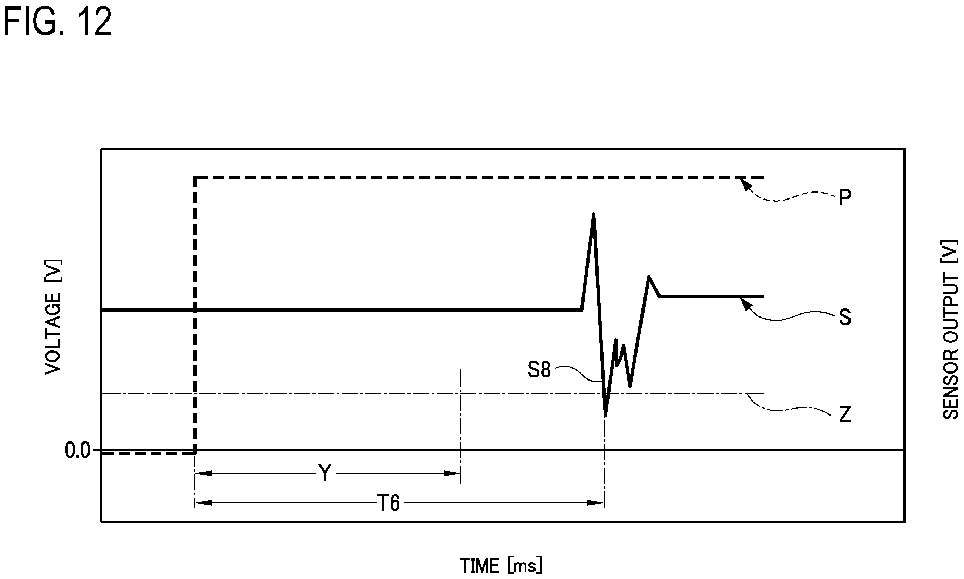

FIG. 9 is a graph showing a relationship between vibration S, voltage P, and time T under the condition where the voltage is 80%. FIG. 10 is a graph showing a relationship between vibration S, voltage P, and time T under the condition where the voltage is 90%. FIG. 11 and FIG. 12 are graphs to explain the delay of the response time due to an increase in the sliding resistance. FIG. 11 is a graph showing a relationship between vibration S, voltage P, and time when there is no sliding resistance, and FIG. 12 is a graph showing a relationship between vibration S, voltage P, and time T when the sliding resistance increases. In each graph, a vertical axis represents solenoid valve pressure [V] indicating pressure P, and vibration sensor output [V] indicating vibration S, and a horizontal axis represents time [ms]. The vibration S generated at the time of valve opening is not caused by the water hammer phenomenon occurring just after valve closing, but is caused by the collision of the movable iron core 9 with the fixed iron core 8.

When the excitation coil 7 is electrically energized (a voltage changes: P3 → P4 in FIG. 8, P5 → P6 in FIG. 9, and P7 → P8 in FIG. 10), the movable iron core 9 is attracted into contact with the fixed iron core 8. Accordingly, the element valve 16 is moved away from the valve seat 14a.

Under the condition where the voltage P is 70% (voltage P4), after the time T2 passes, the vibration S5 with an amplitude exceeding the threshold X is generated when the movable iron core 9 comes into contact with the fixed iron core 8. Then, under the condition where the voltage P is 80% (voltage P6), after a lapse of the time T3 shorter than the time T2, the vibration S6 with an amplitude exceeding the threshold X is generated. Further, under the condition where the voltage is 90% (voltage P 8), after a lapse of the time T4 shorter than the time T3, the vibration S7 with an amplitude exceeding the threshold X is generated.

Comparing the heights of the voltage P with the length of the time T, the higher the voltage P is (P4 < P6 < P8), the shorter the response time T is (T2 > T3 > T4). The lower the voltage P is, the longer the response time T is.

Then, wear detection for the movable iron core 9 will be explained with FIGs. 11 and 12. In the valve main body 2, the sliding resistance is increased in a sliding part of the movable iron core 9 (i.e., a contact surface with an inner wall of the coil bobbin 10) by aging wear of the movable iron core 9. Compared with the case where there is no sliding resistance in FIG. 11 (vibration S7), the motion of the movable iron core 9 delays (T6 - T5) when the sliding resistance is increased in FIG. 12 (vibration S8). This delay in motion of the movable iron core 9 appears as in the case when the voltage P drops. That is, the higher the sliding resistance is, the slower the motion of the movable iron core 9 is. Further, the higher the sliding resistance is, the longer the response time to the valve fully open is. Accordingly, detecting the delay in motion of the movable iron core 9 when the response time exceeds a predetermined time, i.e. a threshold Y, that is, when the vibration S is not detected within the predetermined time, an increase in the sliding resistance can be estimated. For example, when the response time exceeds the threshold Y, it is possible to determine replacement timing for a product and to perform preventive maintenance of lifetime of the product. Also, since vibration is low or is not generated even if the movable iron core 9 stops on the way, it is possible to detect abnormality of the valve main body 2.

As described above, the fluid control valve 1 in the present embodiment can provide the following operations and effects.
(1) The fluid control valve 1 includes the valve main body 2 and the vibration sensor 3. The valve main body 2 includes the actuator section 4 and the valve section 5. The actuator section 4 is provided with the movable iron core 9 including the valve element 16 and configured to move the movable iron core 9. The valve section 5 is provided with the valve seat 14a with which the valve element 16 will come into or out of contact. The vibration sensor 3 detects the vibration S generated in the valve main body 2. The vibration S is generated by a water hammer phenomenon. The water hammer phenomenon generates impact when the valve element 16 comes into contact with the valve seat 14a and no fluid leaks between the valve element 16 and the valve seat 14a. The fluid control valve 1 further includes the controller 6 (the abnormality determining program 19). The fluid control valve 1 determines the valve main body 2 to be normal when the sensor 3 detects the vibration S with an amplitude exceeding the predetermined threshold X, and determines the valve main body 2 to be abnormal when the sensor 3 does not detect the vibration S with an amplitude exceeding the predetermined threshold X. Accordingly, by utilizing the water hammer phenomenon the fluid control valve 1 can detect a slight leak at the valve closing part of the valve main body 2 by detecting the vibration S with an amplitude not exceeding the threshold X.
(2) In the fluid control valve 1 described in (1), the vibration sensor 3 is specialized in detecting the impact. Accordingly, it is possible for the vibration sensor 3 to detect a slight impact. Therefore, the fluid control valve 1 can detect the vibration S generated by a slight impact by the water hammer phenomenon, and it can definitely detect a slight leak at the valve closing part of the valve main body 2.
(3) In the fluid control valve 1 described in (1) or (2), the vibration sensor 3 is located in a position where the vibration S can be detected. Accordingly, the vibration S is transmitted to the valve main body 2 entirely, therefore, it is possible to attach the vibration sensor 3 to anywhere in the valve main body 2.
(4) In the fluid control valve 1 described in one of (1) to (3), the controller 6 determines the valve main body 2 to be abnormal based on a detection result of the vibration, even when the leak is caused by threadlike foreign substances. Accordingly, the fluid control valve 1 can definitely detect a slight leak caused by the threadlike foreign substances having a thickness of about 100 µm.
(5) In the fluid control valve 1 described in one of (1) or (4), the controller 6 determines the valve main body 2 to be abnormal when the vibration S is not detected within a predetermined time (the threshold Y). Accordingly, since the sliding resistance is increased in the sliding part of the movable iron core 9, the response time to the valve fully open is long. Therefore, it is possible to determine replacement timing for the valve main body 2 by time-sequentially looking.

The present invention may be embodied in other specific forms without departing from the essential characteristics thereof.

For example, the valve main body 2 is a solenoid valve in this embodiment, however, other types of fluid control valve may be used, such as a pilot valve driven with air.

The vibration sensor 3 in this embodiment is a sensor to detect the vibration, however, instead of the vibration sensor, an accelerator sensor to detect an acceleration speed may be used.

The vibration sensor 3 in this embodiment is positioned at the side surface 11a of the yoke 11, however, the position where it is possible to detect the vibration may be used.

Also, the vibration sensor 3 may be installed on a bottom surface (an outer surface) of the passage block 14. The vibration is generated when the valve element 16 contacts with the valve seat 14a, so that it can be detected by attaching it to the bottom surface of the passage block 14. The attachment may be also embedded in the passage block 14.

Further, the vibration sensor 3 may be installed on an upper surface of the yoke 11 inside the fluid control valve 1. It is easy to detect the vibration caused by the motion of the movable core 9. The yoke 11 is a metal member and the vibration sensor 3 can directly detect the vibration. It is possible to incorporate the sensors into products.

### Reference Sings List

- 1: Fluid control valve with sensor
- 2: Valve main body
- 3: Vibration sensor
- 4: Actuator section
- 5: Valve section
- 7: Excitation coil
- 8: Fixed iron core
- 9: Movable iron core
- 14a: Valve seat
- 16: Diaphragm valve element

## Claims

1. A fluid control valve (1) with a sensor, comprising:
a valve main body (2) including:
an actuator section (4) provided with a movable member (9) including a valve element and configured to move the movable member (9); and
a valve section (5) provided with a valve seat (14a) with which the valve element (16) will come into or out of contact; and
a vibration sensor (3) which detects vibration generated in the valve main body (2),
wherein the vibration is generated by impingement of fluid flowing from an inlet passage (14b) towards an outlet passage (14c) by a water hammer phenomenon that generates impact when the valve element (16) comes into contact with the valve seat (14a) and no fluid leaks between the valve element (16) and the valve seat (14a), and
the fluid control valve (1) further includes an abnormality determining unit (6) configured to determine the valve main body (2) to be normal with no fluid leak between the valve element (16) and the valve seat (14a) when the vibration sensor (3) detects the vibration with an amplitude exceeding a predetermined threshold (X), and determine the valve main body (2) to be abnormal with fluid leak between the valve element (16) and the valve seat (14a) when the vibration sensor (3) does not detect the vibration with an amplitude exceeding the predetermined threshold (X), and the abnormality determining unit (6) determines the valve main body (2) to be abnormal based on a detection result of the vibration even when a fluid leak is caused by threadlike foreign substances.

2. The fluid control valve (1) with the sensor according to claim 1, wherein the vibration sensor (3) is specialized in detecting the impact.

3. The fluid control valve (1) with the sensor according to claim 1 or 2, wherein the vibration sensor (3) is located in a position where the vibration can be detected.

4. The fluid control valve (1) with the sensor according to any one of claims 1 to 3, wherein the abnormality determining unit (6) determines the valve main body (2) to be abnormal when the vibration is not detected within a predetermined time.

## Patentansprüche

1. Fluidsteuerventil (1) mit einem Sensor, umfassend:
einen Ventilhauptkörper (2), der Folgendes beinhaltet:
einen Betätigungsabschnitt (4), der mit einem beweglichen Element (9) versehen ist, der ein Ventilelement beinhaltet und dazu angepasst ist, um das bewegliche Element (9) zu bewegen; und
einen Ventilabschnitt (5), der mit einem Ventilsitz (14a) versehen ist, mit dem das Ventilelement (16) in Kontakt kommt oder aus dem Kontakt kommt; und
einen Vibrationssensor (3), der Vibrationen erfasst, die in dem Ventilhauptkörper (2) erzeugt werden,
wobei die Vibration durch Auftreffen von Fluid erzeugt wird, das von einem Einlasskanal (14b) zu einem Auslasskanal (14c) strömt, durch ein Wasserschlagphänomen, das einen Aufprall erzeugt, wenn das Ventilelement (16) mit dem Ventilsitz (14a) in Kontakt kommt und kein Fluid zwischen dem Ventilelement (16) und dem Ventilsitz (14a) austritt, und
das Fluidsteuerventil (1) ferner eine Anomalie-Bestimmungseinheit (6) beinhaltet, die dazu angepasst ist, um zu bestimmen, dass der Ventilhauptkörper (2) ohne Fluidleckage zwischen dem Ventilelement (16) und dem Ventilsitz (14a) normal ist, wenn der Vibrationssensor (3) die Vibration mit einer Amplitude erfasst, die einen vorbestimmten Schwellenwert (X) überschreitet, und zu bestimmen, dass der Ventilhauptkörper (2) mit Fluidleckage zwischen dem Ventilelement (16) und dem Ventilsitz (14a) nicht normal ist, wenn der Vibrationssensor (3) die Vibration nicht mit einer Amplitude erfasst, die den vorbestimmten Schwellenwert (X) überschreitet, und die Anomalie-Bestimmungseinheit (6) bestimmt, dass der Ventilhauptkörper (2) basierend auf einem Erfassungsergebnis der Vibration anormal ist, selbst wenn ein Flüssigkeitsleck durch fadenförmige Fremdstoffe verursacht wird.

2. Fluidsteuerventil (1) mit dem Sensor gemäß Anspruch 1, wobei der Vibrationssensor (3) auf das Erfassen des Aufpralls spezialisiert ist.

3. Fluidsteuerventil (1) mit dem Sensor gemäß Anspruch 1 oder 2, wobei der Vibrationssensor (3) in einer Position angeordnet ist, in der die Vibration erfasst werden kann.

4. Fluidsteuerventil (1) mit dem Sensor gemäß einem der Ansprüche 1 bis 3, wobei die Anomalie-Bestimmungseinheit (6) den Ventilhauptkörper (2) als anormal bestimmt, wenn die Vibration nicht innerhalb einer vorbestimmten Zeit erfasst wird.

## Revendications

1. Soupape de régulation de fluide (1) dotée d'un capteur, comprenant :
un corps principal de soupape (2) incluant :
une section d'actionneur (4) pourvue d'un organe mobile (9) incluant un élément de soupape et configurée pour déplacer l'organe mobile (9) ; et
une section de soupape (5) pourvue d'un siège de soupape (14a) avec lequel l'élément de soupape (16) viendra en contact ou hors de contact ; et
un capteur de vibration (3) qui détecte une vibration générée dans le corps principal de soupape (2),
dans laquelle la vibration est générée par l'impact d'un fluide s'écoulant depuis un passage d'entrée (14b) vers un passage de sortie (14c) par un phénomène de coup de bélier qui génère un choc lorsque l'élément de soupape (16) vient en contact avec le siège de soupape (14a) et aucun fluide ne fuit entre l'élément de soupape (16) et le siège de soupape (14a), et
la soupape de régulation de fluide (1) inclut en outre une unité de détermination d'anomalie (6) configurée pour déterminer que le corps principal de soupape (2) est normal sans fuite de fluide entre l'élément de soupape (16) et le siège de soupape (14a) lorsque le capteur de vibration (3) détecte la vibration avec une amplitude dépassant un seuil prédéterminé (X), et déterminer que le corps principal de soupape (2) est anormal avec une fuite de fluide entre l'élément de soupape (16) et le siège de soupape (14a) lorsque le capteur de vibration (3) ne détecte pas la vibration avec une amplitude dépassant le seuil prédéterminé (X), et l'unité de détermination d'anomalie (6) détermine que le corps principal de soupape (2) est anormal sur la base d'un résultat de détection de la vibration même lorsqu'une fuite de fluide est provoquée par des substances étrangères filiformes.

2. Soupape de régulation de fluide (1) dotée du capteur selon la revendication 1, dans laquelle le capteur de vibration (3) est spécialisé pour détecter le choc.

3. Soupape de régulation de fluide (1) dotée du capteur selon la revendication 1 ou 2, dans laquelle le capteur de vibration (3) est situé dans une position où la vibration peut être détectée.

4. Soupape de régulation de fluide (1) dotée du capteur selon l'une quelconque des revendications 1 à 3, dans laquelle l'unité de détermination d'anomalie (6) détermine que le corps principal de soupape (2) est anormal lorsque la vibration n'est pas détectée dans un délai prédéterminé.
